# EUROPEAN PATENT SPECIFICATION

(11) **EP 2 814 993 B1**
(45) Date of publication and mention of the grant of the patent: **24.07.2019**
(21) Application number: 13748702.1
(22) Date of filing: 14.02.2013
(51) Int. Cl.: C22B 3/14, C22B 19/34

(54) **PROCESS FOR ZINC OXIDE PRODUCTION FROM ORE**
VERFAHREN ZUR HERSTELLUNG VON ZINKOXID AUS ERZ
PROCÉDÉ POUR LA PRODUCTION D'OXYDE DE ZINC À PARTIR DE MINERAI

(30) Priority: 15.02.2012 AU 2012900554
(43) Date of publication of application: 24.12.2014
(73) Proprietor: Steel Dynamics Investments, LLC, Fort Wayne, IN 46804 (US)
(72) Inventor: SHAW, Raymond, Walter, Princes Hill, Victoria 3054 (AU)
(74) Representative: Isern Patentes y Marcas S.L.
(86) International application number: PCT/AU2013/000121
(87) International publication number: WO 2013/120132

(56) References cited:
- WO-A1-94/08057
- WO-A1-98/48066
- WO-A1-2009/009825
- WO-A1-2010/108212
- WO-A1-2012/068620
- WO-A1-2012/068620
- WO-A1-2012/068621
- CN-A- 101 538 648
- CN-A- 102 212 700
- US-A- 5 234 669
- US-A- 5 759 503
- WANG RUI-XIANG ET AL.: 'Leaching Kinetics of low grade zinc oxide ore in NH3- NH4C1-H20 system' JOURNAL OF CENTRAL SOUTH UNIVERSITY OF TECHNOLOGY vol. 15, 2008, CHINA, pages 679 - 683, XP055159668

## Description

### Field of the Invention

The present invention generally relates to a process for the recovery of zinc in the form of high purity controlled surface area zinc oxide from zinc containing ores, and more particularly both sulphidic zinc ores, such as zinc sulphidic ores, and oxidised zinc ores such as zinc silicate ores, or zinc carbonate ores. It should be appreciated that the process of the present invention can be used to produce zinc oxide from any suitable oxidized zinc ore such as smithsonite based ore which contains zinc carbonates and/or hemimorphite or similar silicate based ore and/or zincite based zinc oxide ore.

### Background of the Invention

The following discussion of the background to the invention is intended to facilitate an understanding of the invention. However, it should be appreciated that the discussion is not an acknowledgement or admission that any of the material referred to was published, known or part of the common general knowledge as at the priority date of the application.

The current dominant process for producing zinc metal is to mine zinc sulphide mineral ores, produce a zinc sulphide concentrate (ZnS), which typically contains some iron and lead as impurities, and then treat this concentrate to make zinc metal. Zinc oxide can then be produced by thermal treatment of the zinc metal.

The conventional process for converting the ZnS concentrate to zinc metal involves burning the ZnS concentrate in air/oxygen (roasting) to produce a ZnO rich calcine then leaching the ZnO rich calcine in sulphuric acid to prepare a zinc electrolyte from which zinc metal is produced by electrolysis.

The ZnO rich calcine also contains some zinc and iron content, in the form of zinc ferrite and some lead oxide. These do not fully dissolve in the electrolyte. Therefore, additional treatment is used to recover the zinc and to separate the iron and lead normally in a mixed oxide sulphate form, such as paragoethite. This material can then be treated in a lead smelter to make an environmentally suitable solid for discharge and to recover the contained lead and zinc.

This conventional Zn metal production process is quite effective for handling the lead and iron, and residual zinc. However, the process can be hampered by the presence of a sulphate reside which restricts how this material can be processed as the sulphate has to be heated and driven off then captured and converted to acid. Lead smelters do not prefer this sulphate residue as the required heating uses considerable energy and the gas produced has low sulphur content and is not well suited to efficient treatment in conventional acid plants.

The conventional zinc production process is well suited to making zinc metal from low impurity zinc concentrate. However, the process is not as energy efficient or economically attractive for producing ZnO as it requires considerable energy, and equipment just to convert the ZnO in calcine into Zn metal and then oxidize it back into the oxide.

Furthermore, oxidised zinc ores, particularly zinc silicate and zinc carbonate based ores, can be difficult to treat economically using the above discussed conventional processing as they are often too low grade to treat directly in smelters but are difficult to treat hydrometallurgically in acid circuits because of the presence of silica and/or carbonates.

It would therefore be desirable to provide an alternate process for producing both zinc oxide and, if desired zinc metal, from a zinc containing ore.

International patent application PCT/AU201 1/001507 (published as international patent publication WO2012/068620) in the name of the same applicant describes a process for recovering zinc from a zinc containing material, such as EAF dust, using a lixiviant comprising an aqueous mixture of NH 3and NH 4Cl, or ionic equivalent, having a NH 4Cl concentration between 10 and 150 g/L H 2O and a NH 3concentration of between 20 g/L H 2O and 250 g/L H 2O. The resulting zinc containing leachate is stripped of ammonia to produce a stripped liquor which includes a zinc containing precipitate. The stripped liquor has a NH 3concentration of between 7 and 30 g/L H 20. The zinc content can be recovered from the precipitate using one or a combination of hydrolysis or high temperature roasting.

The applicant has further refined this process for use in the recovery of zinc oxide from zinc containing ores, and more particularly oxidised zinc ores and zinc sulphide ores.

It would therefore be desirable to provide an improved or at least alternative process which can recover the zinc values from a zinc containing ore, and in particular oxidised ores containing zinc and sulphide ores.

It should be understood that any metal such as zinc, manganese, iron, lead etc. should be understood to include any chemical form (i.e. metal, salts, complexes, chelates, etc) or ionic form.

It is also to be understood that all the concentrations used in this specification are based around g/KgH 20 or g/L H 20 and not g/L of actual liquor volume. It is to be appreciated that g/L of actual liquor volume does not really reflect the chemistry of the process of the present invention as the NH 3and high levels of salts all affect the volume especially the NH 3when present at high values.

International patent application WO2010/108212 refers to a method for leaching zinc from a zinc bearing carbonate ore. The method disclosed in this patent application requires a three-step method including roasting a zinc-bearing carbonate ore at above 300 and below 900 degrees, subjecting the roasted ore to aqueous acid or alkali leach to produce an aqueous zinc solution, and then engaging in a zinc recovery step from the aqueous zinc solution. D8 provides for recovering zinc oxide only from zinc carbonate ores.

Accordingly, there is a need for processes for recovering zinc oxide from zinc containing ores including both carbonate and non-carbonate ores

### Summary of the Invention

A first aspect of the present invention provides a process for recovering zinc oxide from a zinc ore, the process including the steps of:
Roasting the zinc ore in air/oxygen atmosphere to produce a ZnO rich calcine,
leaching the ZnO rich calcine with an alkaline lixiviant comprising an aqueous mixture of NH₃ and NH₄Cl, or ionic equivalent, having a NH₄Cl concentration of between 10 g/L and 150 g/L H 20 and a NH₃ concentration of between 20 g/L H 20 and 250 g/L H₂O, to produce a zinc containing leachate and a solid residue;
stripping ammonia from the leachate to produce a stripped liquor which includes a zinc containing precipitate, the stripped liquor having a NH 3concentration of between 7 and 30 g/L H₂0;
separating the zinc containing precipitate from the stripped liquor; and
converting the recovered zinc containing precipitate into zinc oxide using one or both of the steps of:
   roasting the zinc containing precipitate to a temperature of between 400 to 900°C; or hydrolysis of the zinc containing precipitate in water having a temperature of between 80 and 300 °C.

The applicants have found that the process disclosed in International patent application PCT/AU2011/001507 (published as international patent publication WO2012/068620, the contents of should be understood to be incorporated into the specification by this reference) can be adapted for production of ZnO directly from zinc ore. The resulting process is advantageous in requiring less energy and equipment than the conventional sulphuric acid leach and electrolysis recovery process.

It should be appreciated that the process of the present invention can be used to produce zinc oxide from any suitable zinc containing ore. Suitable zinc ores include, but are not restricted to, both sulphidic and oxidised zinc ores, and includes (but is not limited to) ores such as zinc silicate ores and zinc carbonate ores.

For the process of the present invention, the zinc ore, is mined, and then preferably undergoes various comminution process such as crushing, milling and/or grinding to form a powder. The zinc ore is then preferably concentrated using any number of conventional concentrating and separation process (for example floatation process such as froth flotation or similar) to form a zinc ore concentrate.

Thereafter, in some embodiments the comminuted and/or concentrated ore may be directly leached. Direct leaching of the zinc ore (preferably comminuted and/or concentrated) is particularly applicable for zinc silicate ores (for example ZnSi₂O₄), any zinc oxide ore content and in some instances, zinc carbonate ores (for example ZnCO₃). However other zinc containing ores may require further preprocessing prior to the leaching step.

The zinc ore roasting step can be conducted at any suitable temperature which converts a desired portion, and more preferably substantially converts the oxidised content of the zinc ore to zinc oxide. The roasting temperature depends on the composition of zinc ore. In some embodiments, the zinc ore is roasted at temperatures between 200 and 1000 °C. For zinc carbonate ores, it is preferred that the zinc ore roasting temperature is between 200 and 600 °C, and preferably <400 °C and more preferably <350 °C, and most preferably in the range 250 to 350 °C to decompose the zinc carbonate to allow direct production of substantially carbonate free zinc containing crystals which can then be converted to high purity ZnO. The zinc carbonate decomposes readily when heated above 200 °C but higher temperatures may be used to improve the reaction rate and allow for smaller equipment. For sulphide ores, a higher temperature is preferred, typically between 500 to 1000 °C and more preferably at around 600 to 900 °C to oxidize the sulphide to give a ZnO calcine for feeding to the leach section for producing high purity ZnO. The ZnO rich calcine is then leached under the same conditions as the zinc ore concentrate with the alkaline lixiviant to produce the zinc containing leachate and the solid residue. In some embodiments, a mixture of zinc ore and ZnO rich calcine could be used as the Zn feed for the leaching step.

The processing of zinc sulphide ores and zinc carbonate ores provides a second aspect of the present invention. The second aspect provides a process for recovering zinc oxide, preferably from a zinc sulphide ore concentrate or a zinc carbonate ore concentrate. The process includes the steps of:
roasting a zinc ore concentrate in air/oxygen atmosphere to produce a ZnO rich calcine;
leaching the ZnO rich calcine with an alkaline lixiviant comprising an aqueous mixture of NH₃ and NH₄Cl, or ionic equivalent, having a NH₄Cl concentration of between 10 g/L and 150 g/L H 2O and a NH₃ concentration of between 20 g/L H₂O and 250 g/L H₂O, to produce a zinc containing leachate and a solid residue; stripping ammonia from the leachate to produce a stripped liquor which includes a zinc containing precipitate, the stripped liquor having a NH₃ concentration of between 7 and 30 g/L H₂O;
separating the zinc containing precipitate from the stripped liquor; and converting the recovered zinc containing precipitate into zinc oxide using one or both of the steps of:
   roasting the zinc containing precipitate to a temperature of between 400 to 900°C; or
   hydrolysis of the zinc containing precipitate in water having a temperature of between 80 and 300 °C.

The processing of some zinc carbonate ores provides a third aspect of the present invention. The third aspect provides a process for recovering zinc oxide from a zinc carbonate ore. The process includes the steps of:
roasting a zinc carbonate ore concentrate in air/oxygen atmosphere to produce a ZnO rich calcine
leaching the ZnO rich calcine with an alkaline lixiviant comprising an aqueous mixture of NH₃ and NH₄Cl, or ionic equivalent, having a NH₄Cl concentration of between 10 g/L and 150 g/L H 20 and a NH₃ concentration of between 20 g/L H 20 and 250 g/L H₂O, to produce a zinc containing leachate and a solid residue;
stripping ammonia from the leachate to produce a stripped liquor which includes a zinc containing precipitate, the stripped liquor having a NH₃ concentration of between 7 and 30 g/L H₂O;
separating the zinc containing precipitate from the stripped liquor; and converting the recovered zinc containing precipitate into zinc oxide using the steps of:
   hydrolysis of the zinc containing precipitate in water having a temperature of between 80 and 300 °C; and
   roasting (calcining) the zinc containing precipitate to a temperature of less than 450 °C.

Again, the zinc ore concentrate roasting step can be conducted at any suitable temperature which converts a desired portion, and more preferably substantially converts the oxidised content of the zinc ore concentrate to zinc oxide. As detailed above, the roasting temperature depends on the composition of zinc ore and the concentrate made therefrom.

A fourth aspect of the present invention provides a process for recovering zinc oxide from a zinc sulphide ore or zinc sulphide ore concentrate, the process including the steps of:
Roasting the zinc sulphide ore or zinc sulphide ore concentrate in air/oxygen atmosphere to produce a ZnO rich calcine,
leaching the zinc sulphide ore or zinc sulphide ore concentrate with an an alkaline lixiviant comprising an aqueous mixture of NH₃ and NH₄Cl, or ionic equivalent, having a NH₄Cl concentration of between 10 g/L and 150 g/L H 20 and a NH₃ concentration of between 20 g/L H 20 and 250 g/L H₂O, to produce a zinc containing leachate and a solid residue;
stripping ammonia from the leachate to produce a stripped liquor which includes a zinc containing precipitate, the stripped liquor having a NH₃ concentration of between 7 and 30 g/L H₂O;
separating the zinc containing precipitate from the stripped liquor; and converting the recovered zinc containing precipitate into zinc oxide using one or both of the steps of:
   roasting the zinc containing precipitate to a temperature of between 400 to 900°C; or
   hydrolysis of the zinc containing precipitate in water having a temperature of between 80 and 300 °C.

The process of each aspect of the present invention therefore uses an alkaline ammonium based lixiviant to selectively leach the zinc directly from zinc ores, particularly an oxidised zinc ore, or from a ZnO rich calcine produced by calcining the zinc ore. The overall process predominantly leaves zinc in solution in the resultant leachate. By particular selection of lixiviant composition and particular control of the ammonium stripping step, a zinc solution can be produced that can have the zinc solubility modified by ammonia stripping to a selected ammonia concentration and pH that facilitates recovery of a substantial portion of the contained zinc as basic zinc compounds leaving a zinc depleted ammonium chloride liquor for recycle.

As discussed in international patent application PCT/AU201 1 /001507, the applicant has discovered that the particular formulation of lixiviant used in the leaching step of the process of the present invention and the particular stripping conditions results in an advantageous zinc precipitate composition in the stripping step, whilst leaching the zinc of a zinc ore, zinc ore concentrate and/or ZnO rich calcine in high enough zinc concentrations to be economically viable. The low NH 4Cl concentration (compared to prior NH 4Cl leaching systems) used in the lixiviant of the leaching step produces a substantially ammonia free precipitate from the stripping step. Furthermore, the resulting stripped liquor pH and NH 3concentration create the appropriate equilibrium conditions within that liquor to precipitate desirable basic zinc compound or mixture of compounds. The process can therefore reduce the use of, or avoid the use of NaOH and/or dilution water additions to assist in recovering the zinc from the stripped liquor.

The process of the present invention aims to reduce, and more preferably substantially avoid the formation of zinc dichlorodiammine (ZDC) crystal precipitate after ammonia stripping. This is achieved using a NH 4Cl concentration in the lixiviant of between 10 g/L H 20 and 150 g/L H 20. To ensure ZDC crystal formation is substantially avoided, it is preferred that the NH 4Cl concentration used in the lixiviant is between 20 g/L H 20 and 100 g/L H 20, preferably between 30 g/L H 20 and 90 g/L H 20, and most preferably about 50 g/L H 20.

The concentration of NH 3in the lixiviant is selected to optimize the solubility of zinc in the lixiviant to both extract it from the feed zinc ore, zinc ore concentrate, or ZnO rich calcine and to minimise the cost of subsequent processing. The concentration of NH 3in the lixiviant is preferably between 20 g/L H 2O and 150 g/L H 2O, more preferably between 30 and 100 g/L H 2O, yet more preferably about 75 g/L H 2O and even yet more preferably about 50 g/L H 2O. The NH 3content improves the solubility of that zinc content above that found in the NH 4Cl leach system for NH 4Cl concentrations between 10 g/l H 2O and 150 g/l H 2O, and thereby provides a more efficient leaching system.

The aqueous NH 3/NH 4Cl lixiviant composition can comprise any suitable alkaline solution which includes an ammonium species, a hydroxide species and a chloride species, and in particular ionic forms of those species. It should be understood that the lixiviant could be formed using ionic equivalent salts such as NH 4OH/NH 4Cl mixtures and that these ionic equivalents are intended to be covered in the scope of the present invention.

The lixiviant has a pH > 7. An alkaline lixiviant is less conducive to iron solubilisation and minimizes lead and manganese solubilisation. The addition of ammonia and/or ammonium hydroxide should be sufficient to make the lixiviant alkaline in terms of normal aqueous chemistry. The ammonia stripping step is preferably conducted to ensure that the ammonia concentration is not reduced to a level in which the pH of the stripped liquor is less than 7. The amount of free ammonia available in the solution for removal is dependent on the pH. As the ammonia is stripped to take the pH below 7 selective removal of ammonia is very difficult and energy inefficient and is therefore not preferred. Stripping the ammonia to this level can also cause considerable water to also evaporate which increases the energy use. These conditions also increase the concentration of NH 4Cl such that the undesirable zinc diammine chloride crystals can form.

The leach efficiency with this lixiviant has been found to have a low dependence on NH 4Cl concentration. Leach efficiency rather requires time to maximize extraction. Two or more leach stages are therefore preferably used to maximise solids contact time in the leach, to ensure a higher extraction of zinc into the leachate. In a preferred embodiment, the leaching step comprises a two stage leach. Each leach stage is preferably agitated.

The leach step produces a zinc rich leachate and a solid residue. In some embodiments that residue can be treated pyrometallurgically, for example, in a Waelz kiln to produce a zinc oxide containing residue. That zinc oxide containing residue can then be recycled into the leaching step for use as a feedstock. This increases the zinc recovery of the overall process.

In another embodiment, the solid residue can be treated in a lead smelting operation to recover the lead as metal and to dissolve the zinc into a slag phase which can be further treated such as by slag fuming to separate off the zinc as an impure zinc oxide which can then be returned to the leach circuit to recover the zinc as high purity zinc oxide.

The leaching step produces a zinc rich leachate that can have its zinc solubility modified by ammonia stripping. The step of stripping ammonia from the leachate precipitates out basic zinc compounds producing a stripped liquid containing solid zinc product. A substantial portion of the contained zinc can be recovered as basic zinc compounds leaving a zinc depleted ammonium chloride liquor for recycle. The process can then include the step of removing solids from the stripped liquid which can then be recovered. Advantageously, no additional evaporation steps are required to remove additional water as no water dilution additions have been made in the process.

The stripping step may only strip a proportion of the ammonia from the leachate. However, it is preferred that the majority of the NH 3is stripped out of the leachate in the stripping step to produce a precipitate comprising most of the zinc that was in the leach liquor in a substantially ammonia free zinc compound. The NH 3concentration after stripping is between 7 and 30 g/L H 20 and preferably ∼ 15 g/L H 20. Where most of the NH 3is stripped out of the leachate, the zinc is precipitated in the stripped liquor in the form of zinc containing crystals comprising at least one of zinc hydroxide (Zn(OH) 2), zinc hydroxy chloride (Zn 5(OH) 8Cl 2.H 20), zinc oxide (ZnO), or zinc carbonate (ZnC0 3) or a combination thereof. For subsequent processing, it is preferred that the process is optimised to produce a low chloride compound as is practical within the constraints of the chemical compositions needed to undertake the leach step efficiently.

Ammonia stripping can be performed by any number of processes.

In one embodiment, the ammonia stripping step includes an air stripping step. The air stripping step preferably includes at least one vessel in which an air stream is fed over or through the zinc containing leachate to vaporise or otherwise remove a portion of the ammonia content of that leachate. The zinc containing leachate may be continually heated in one or more of the strip vessels of the process steps. Heating may be achieved using an internal heating element, or more preferably an external heat exchanger. In those applicable embodiments, part or all of the heat may be supplied by capturing waste heat from a furnace used in the zinc ore roasting step and transferring this heat using a suitable heat exchange system to one or more process streams in ammonia stripping.

In another embodiment, the ammonia stripping step includes a flash step in which a heated and pressurised leachate is fed into a flash vessel to flash off a mixed ammonia-water vapour stream leaving a supersaturated zinc liquor from which the zinc compounds precipitate.

Crystallisation of the zinc compounds can occur insitu, within the strip vessels or in a separate crystallisation vessel/stage. Crystals of zinc compounds can be added to this stage to assist in precipitation by providing surface for the compounds to grow upon by either recycling crystals and/or retaining some in the system from previous batches.

In some embodiments, the precipitation of the zinc containing precipitate is conducted in a separate vessel after the ammonia stripping either directly or with the help of some deliberate cooling of the liquor. The amount of cooling depends upon the solution composition and is not always necessary as many of the compositions used have only small solubility changes with temperature. The zinc precipitate is typically formed in crystal form, and therefore the process may include a crystal growth step, such as an agitated tank or similar.

A number of the process streams from the stripping step can be recycled back into the process. For example, water removed in the vapour from the stripping step can be condensed and recycled in at least one washing or filtering step. The stripped ammonia can be captured for recycle to the leaching step. The zinc depleted liquor can be directly recycled back to the leaching step and/or part can be recycled back to the stripping stage to modify the composition of the liquor to improve NH 3removal.

The use of the low concentration leach liquor advantageously enables reverse osmosis to be used when very low ammonia and/or chloride level liquor is required for washing residues and/or for the hydrolysis step. The use of reverse osmosis can also provide a means of producing a suitable liquor stream for removal from the process if the water balance becomes unfavourable. This use of reverse osmosis is not possible in processes using high concentration liquor streams as their osmotic pressure is too high and such processes have to use more costly energy intensive evaporation processes to remove water.

In applicable embodiments, at least a portion of the exothermic energy from the zinc ore roasting step can be captured and used in the ammonia stripping step. In these embodiments, at least one heat exchanger can be used to exchange heat between the zinc ore roasting stage in the ammonia stripping step.

Following the stripping step, the converting steps may include the steps of: separating the zinc containing precipitate from the stripped liquor; and preferably washing the zinc containing precipitate.

This step removes any ammonia present as traces of zinc dichlorodiammine (ZDC) crystals and/or as ammonia containing liquor entrapped in the precipitate. An ammonia free precipitate can give high yields of zinc oxide because the chloride containing compounds within them can be decomposed to yield predominantly zinc oxide with a lesser amount of zinc chloride which can be separated and then recycled or sold. The washing step is preferably conducted with minimal water usage to limit the amount of water used in the process.

The step of converting the recovered zinc containing precipitate(s) with this type of intermediate precipitate product can proceed along various different process steps to convert the zinc containing precipitate into a low chloride product.

In one embodiment, the step of converting the recovered zinc containing precipitate includes the step of roasting the zinc containing precipitate to a temperature of between 600 to 900 °C. The roasting step preferably occurs in a furnace. Roasting between these temperatures substantially converts the product to zinc oxide. Furthermore, any chloride content of the zinc containing precipitate is volatised at this temperature predominantly as ZnCI 2, thereby giving a low chloride high purity product. While higher temperatures speed up the volatilization, the final roasting temperature depends mainly on the economics at any specific installation. It should however be appreciated that removal of chlorides to <0.1 % CI in the end product typically involves roasting the zinc containing precipitate to temperatures in the order of 700 to 800 °C.

In another embodiment, the step of converting the recovered zinc containing precipitate includes the steps of:
hydrolysis of the zinc containing precipitate in water having a temperature of between 80 to 300 °C, preferably between 100 to 200 °C.

Preferably, a high solids loading (>20%) is used, enabling a low (modest) amounts of water to be used for hydrolysis.

Hydrolysis of the zinc containing precipitate may substantially convert any zinc hydroxy chloride content to zinc hydroxide, zinc oxide or a mixture thereof. Hydrolysis of the zinc containing precipitate in hot water between 80 to 300 °C substantially converts any zinc hydroxy chloride content to zinc oxide and/or zinc hydroxide. Hydrolysis preferably achieves a product having a low total and insoluble chloride levels achieved (<0.7%).

After hydrolysis, the hydrolysis product is preferably filtered and cooled. The hydrolysis water can be treated using a separation process, such as reverse osmosis, to provide a low chloride content purified water and a chloride enriched solution both of which can be recycled in the process. For example, the chloride rich stream may be used in the leaching step while the low chloride liquor can be re used in hydrolysis and/or for washing filtered solids. The hydrolysis product is preferably dried to remove water at a temperature of <200 °C to give a ZnO product.

Where a higher purity product is required, the hydrolysed zinc containing precipitate can be subsequently roasted to produce zinc oxide. In these embodiments, the step of converting the recovered zinc containing precipitate includes a further roasting step in which the zinc containing precipitate is roasted to between 300 to 900 °C, preferably between 400 to 800 °C and most preferably between 500 °C and 800 °C. A lower temperature roast may be used if substantially all of the chloride content is removed in the hydrolysis step.

The water from hydrolysis typically contains zinc. At least a portion of the water from the hydrolysis step can be separated and either recycled to the leach or treated to recover the zinc content. Preferably, the water is concentrated to produce a concentrated liquor. This concentrate can be recycled to the leach step. The water is preferably processed and/or concentrated using reverse osmosis to give a clean water stream for recycle or discharge and a more concentrated stream containing chlorides which can be recycled into the process most commonly into the leach or treated and discharged. Again, evaporative processes are ideally avoided given the large amount of energy involved in these processes. Where the concentrated stream is treated rather than recycled, the favoured option is to treat it with NaOH to precipitate any zinc content for recycle into the process as a solid. Ideally the hydrolysis step removes all of the chloride compounds from the zinc containing precipitate. However, if this is not achieved, final chloride traces in the precipitate can be removed by roasting the hydrolysed zinc containing precipitate at temperatures between 500 to 900 °C.

In yet another embodiment, the step of converting the recovered zinc containing precipitate includes the steps of:
a first roasting step in which the zinc containing precipitate is roasted at a temperature of between 300 to 500 °C; and
a second roasting step in which the roasted solids are further roasted between 300 to 900 °C, preferably between 300 to 900 °C.

In some embodiments, after the first roasting step, the roasted zinc containing precipitate undergoes a leaching step with water to produce a leached solid.

The first roasting step in this embodiment decomposes the chloride compounds into ZnO and ZnCl₂. The soluble chloride compounds (mainly ZnCl₂, though some HCl is possible) are then substantially removed in the aqueous leach. Any traces of chloride left can then be removed through further, preferably higher temperature roasting step. This step also converts the zinc containing compounds in the leached solids to ZnO. The double roasting regime enables less water to be used to remove the chloride content in comparison to the previous recovery option as ZnCl₂ is extremely soluble.The added water is preferably recovered and recycled in the process.

In another embodiment, the step of converting the recovered zinc containing precipitate includes the step of: roasting the zinc containing precipitate in a steam atmosphere at around a temperature of between 350 to 500 °C.

This process step is preferably undertaken at moderate pressure of between 1 to 5 bar. This process aims to decompose the zinc hydroxy chloride into ZnO and ZnCl₂ and to hydrolyse the ZnCl₂ in situ to convert it to ZnO. The majority of the chloride content can be removed as HCl. The added water resulting from the steam is preferably recovered and recycled in the process.

In any of these zinc recovery steps, ZnCl₂ is volatised in the roasting step. Each of these processes can further including at least one the steps of condensing the ZnCl₂ and separated for sale as anhydrous ZnCl₂, and/or capturing the ZnCl₂ into an aqueous liquor and recycling this liquor to a preceding process step. This ZnCl₂ rich liquor can be preferably recycled to the crystallisation step or the leach step.

In yet another embodiment, and in particular in those embodiments in which the zinc ore comprises a zinc carbonate ore which does not undergo a pre-roasting step, the step of converting the recovered zinc containing precipitate includes the steps of:
hydrolysis of the zinc containing precipitate in water having a temperature of between 80 and 300 °C; and
roasting the zinc containing precipitate to a temperature of less than 500 °C, preferably less than 400 °C.

The hydrolysis step is undertaken to react the chloride containing compounds to give crystals that are predominantly zinc carbonate. These crystals can then be roasted to decompose the carbonate to leave high purity zinc oxide.

Recovery of the zinc from the leachate preferably includes one or more process steps which separate solids from the leachate, removal procedures for other metal species which may be present in the leachate such as lead, manganese, copper and cadmium and/or process steps to separate the zinc from the leachate.

The separation of solid and liquid elements in the process can be performed using any suitable method. For example, in some embodiments the process includes at least one filtering step to remove solids from the leachate.

The zinc ore or ZnO rich calcine may also include at least one of manganese, lead, copper or cadmium. Other trace elements, species or impurities may also be present. The process of the present invention therefore can include steps of removing any lead, manganese, copper or cadmium from the leachate.

Where the zinc ore or ZnO rich calcine includes lead, this can be removed using selective removal processes. Firstly, it should be appreciated that lead(II) is leached in the leaching step while lead(IV) is not leached and typically only a very small amount of lead is dissolved into the lixiviant. The lead leached from the zinc ore or ZnO rich calcine is preferably returned to the leached solids by oxidation to an insoluble form.

In conventional zinc production, lead present in the zinc sulphide concentrate is converted to lead sulphate and is separated. In the process of the present invention, the lead content is predominantly in the form of lead oxide. Lead oxide is more preferred for further processing due to the absence of sulphur. This lead oxide can readily be treated in conventional lead smelting where the absence of sulphate reduces the energy needed and also avoids the need to handle sulphur containing gases and also allows the leach residue to be treated in Waelz kilns or other such furnaces to recover any unleached zinc and make a slag suitable for other uses.

Controlled oxidation preferentially oxidizes any lead in the lixiviant before any manganese which may be present in the zinc ore or ZnO rich calcine. Thus, any lead can be isolated before manganese. If required the lead removal step is preferably conducted prior to any solids/liquid separation of leachate after the leaching step. However, in some embodiments, lead can be removed and separated after a liquid solids separation step and collected separately.

Where the zinc ore or ZnO rich calcine includes manganese, this can be removed using selective removal processes. Firstly, it should be appreciated that manganese in oxidation states less than +4 is leached in the leaching process but manganese(IV) is not leached and typically only a small amount of manganese dissolves into the lixiviant. The manganese leached from the zinc ore or ZnO rich calcine is preferably returned to the leached solids by oxidation to an insoluble form.

If required the manganese removal step is preferably conducted prior to any solids/liquid separation of leachate after the leaching step. However, in some embodiments, manganese can be removed and separated after a liquid solids separation step and collected separately. Again, it is preferable to conduct the controlled oxidation of lead prior to manganese so lead can be optionally isolated before manganese then removed and manganese subsequently oxidized to manganese dioxide and separated.

Each of the lead and manganese removal steps can comprise chemical oxidation using one of peroxide or chlorine and/or chloride based oxidants such as hypochlorite or chloramine. Air oxidation may also be used to remove these metals. Alternatively, electrochemical oxidation may also be used.

Where the zinc ore or ZnO rich calcine includes copper and cadmium, these can be removed by the well-established process of cementation on zinc. The manganese leached from the zinc ore or ZnO rich calcine is preferably removed using a cementation process which includes the step of adding zinc metal to the leachate. This step can also remove traces of lead and may be used for lead removal instead of, or in addition to, the oxidative step described previously.

The lead, manganese, copper and/or cadmium could also be removed by electrolytic means. Such electrolytic processes can be combined or consecutive or a combination of combined and consecutive.

Further efficiencies to the process can result from the process of the present invention processing zinc ore or ZnO rich calcine concurrently with a conventional sulphuric acid leach process.

In a second aspect of the present invention, there is provided a plant which includes a process according to the first aspect of the present invention. This plant preferably includes a sealed vessel which may comprise a pressure vessel able to present the lixiviant solution and particulate material(s) to ammonia saving confinement for the purpose of the leaching out of the zinc. It should be appreciated that at 80 °C there is little/no pressure but there is a need to confine the gaseous NH 3because it has substantial vapour pressure and it is preferable not to lose any gaseous NH 3.

The present invention also provides zinc oxide produced from a process according to the first aspect of the present invention.

### Brief Description of the Drawings

The present invention will now be described with reference to the figures of the accompanying drawings, which illustrate particular preferred embodiments of the present invention, wherein:
Figure 1 is a general flow diagram showing the process steps of one preferred embodiment of the process according to the present invention.
Figure 2 is a general flow diagram showing the process steps of another preferred embodiment of the process according to the present invention which forms part of an integrated zinc ore treatment plant.
Figure 3 is a general flow diagram showing the process steps of another preferred embodiment of the process according to the present invention, which includes a leach residue recycle unit.
Figure 4 is a plot of zinc carbonate ore mass loss for a given heat treatment temperature.
Figure 5 is a plot of zinc carbonate ore zinc content for a given heat treatment temperature.
Figure 6 is a plot of leach zinc extraction efficiency for zinc carbonate ore for a given heat treatment temperature.
Figure 7 is a plot of zinc and chloride content of the precipitate for zinc carbonate ore for a given heat treatment temperature.

### Detailed Description

The process of the present invention can be used to recover a zinc content from various oxidised zinc ores, including ores containing a content of one or more of zinc sulphidic ores, zinc silicate ores or zinc carbonate ores. Examples include oxidised zinc ores such as found at Beltana in Australian and Skorpion in Namibia (typical minerals are Willemite, Hemimorphite and Smithsonite). The process can also be used to recover a zinc content from other zinc mineral ores such as Sphalerite, Wurtzite, Hyrdozincite or the like.

Oxidised zinc ores are difficult to treat economically using conventional processing as they are often too low grade to treat directly in smelters and are difficult to beneficiate to increase the grade and are also difficult to treat hydrometallurgically in acid circuits because of the presence of silica and/or carbonates. The Applicant considers that the process of the present invention is particularly suited to these ores and provides a much improved process over conventional zinc oxide manufacturing processes, and recovers a high grade zinc oxide product. This can be sold directly for use in applications such as vulcanising rubber, making ceramics and for improved agriculture and can also be used for the production of zinc metal via electrolysis.

For the process of the present invention, the zinc ore is mined and then undergoes one or more comminution processes in which the ore is milled, crushed and/or ground to a powder. The amount of comminution depends on the subsequent processing steps. For ZnS ores, the ores are typically ground to a fine powder to allow the production of a concentrate using flotation. For zinc carbonate and/or zinc oxide and/or zinc silicates, these are more typically just crushed sufficient to allow some separation by gravity or other physical techniques or for direct leaching using the leach liquors described below for the leaching step(s).

The selected comminution process can depend on the leaching process used. For direct leaching using heap or dump leaching the ore would typically be crushed to around 12 to 20 mm using conventional crushing systems. Whereas, if the leaching is to be carried out in a stirred reactor the ore would more typically be crushed to be substantially <2 mm using High Pressure Grinding Rolls and/or tumbling mills such as AG/SAG/Rod or Ball Mills. For certain ores which are more difficult to leach the ore may be ground to a very fine powder with particles substantially finer than 75 microns using stirred mills such as the IsaMill™ to increase the surface area and improve the rate and amount of extraction.

For further processing using physical means the ore would more typically be crushed to <12.5 mm and then processed using conventional systems such as gravity systems based on dense media separation, jigs, and/or spiral classifiers. The product from this treatment would then be suitable for leaching either directly or after further crushing and grinding to make a fine powder to improve the leaching efficiency.

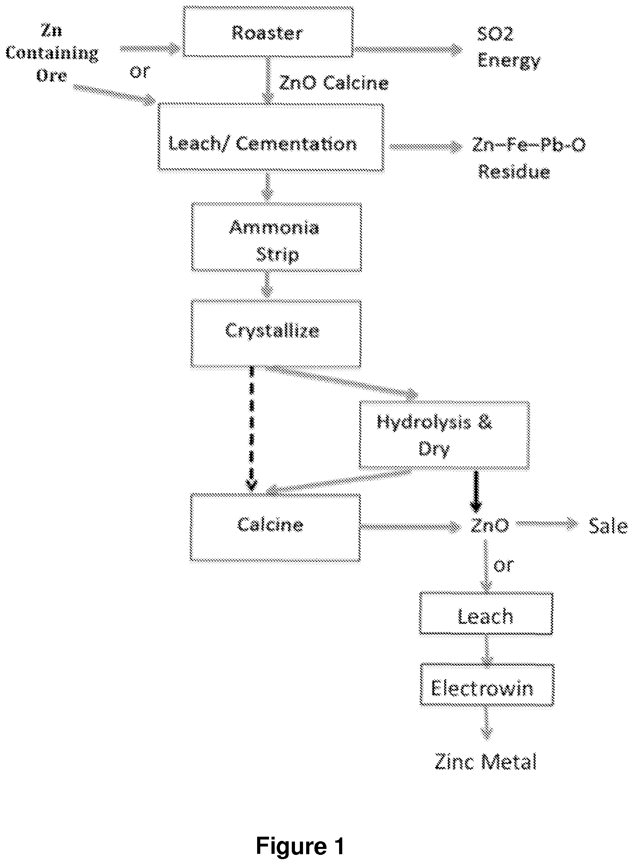

In the process illustrated in Figure 1 , the zinc ore concentrate may be a zinc sulphide ore concentrate, zinc silicate concentrate or a zinc carbonate concentrate depending on the content of the ore fed into the process. In each case, this concentrate typically contains some iron and lead as impurities.

Where the ore contains economic levels of other valuable metals, such as lead, these can also be recovered either by separation from the ore prior to leaching or more commonly by further processing of the residue from the zinc leach step. The separation technique depends upon the mineral form of these metals in that if they are present as sulphides then separation may be achieved using flotation or by gravity systems whereas if they are present as oxides, carbonates or sulphates the separation will most probably be using gravity techniques. Lead minerals are particularly amenable to gravity separation because of their extremely high density.

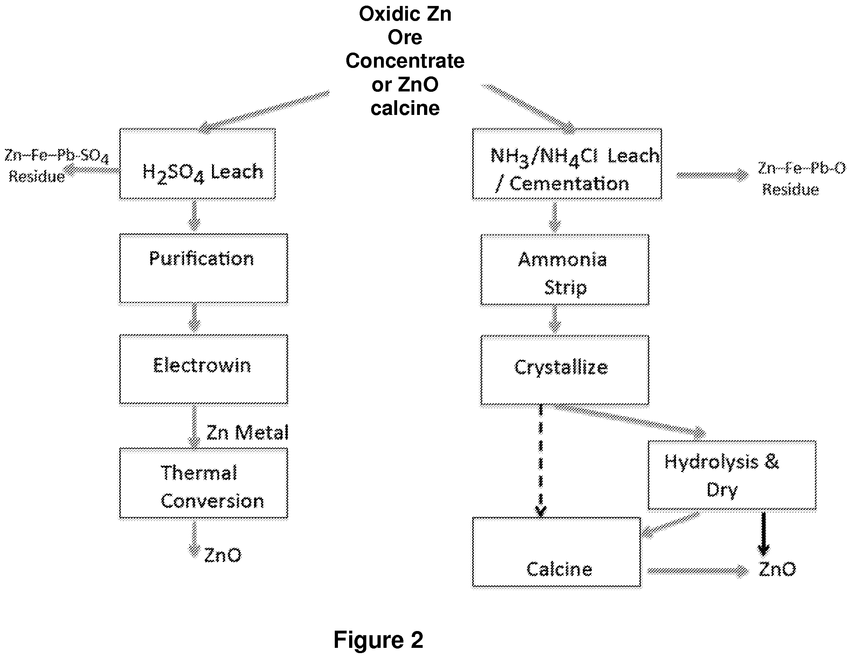

The general process steps after concentration are illustrated in Figure 1. An alternate process, in which this process forms an integrated process with a conventional sulphuric acid leach process is illustrated in Figure 2.

Firstly, referring to the process shown in Figure 1 , it can be observed that the zinc ore concentrate may be directly fed into the leaching step or fed into a pre- roasting stage prior to leaching. The selection of the process step in which the zinc ore is fed into depends on the ore content.

The applicant has found that oxidized zinc ores, such as a zinc carbonate ore, a zinc silicate ore or a zinc oxide ore or combinations thereof, may undergo direct leach. These oxidised ores, need not be calcined/ roasted, but can be concentrated using any number of conventional concentrating and separation process (for example floatation process such as froth flotation or similar) to form a suitable zinc ore concentrate feed for the leaching step.

For some ores, there may be advantages in prior treatment of the ore via concentration and/or a low temperature calcination to improve the grade of the feed to the alkaline ammonium chloride leach. For example, it is preferable for zinc sulphide ores, and in some cases zinc carbonate ores to be fed into a roasting stage to produce a ZnO calcine which is more suitable for the leaching steps.

For high grade zinc ores, the ore may be fed directly to the roasting stage. However, more commonly the ore will be subject to some level of upgrading to a concentrate to increase the zinc content of the material to be roasted.

Therefore, for some zinc containing materials, such as zinc sulphide ore concentrates, and zinc carbonate ore concentrates after concentration, the zinc ore concentrate is fed into a roaster, and roasted in an air/oxygen atmosphere. For zinc carbonate ores, it is preferred that the roasting temperature is between 200 and 500 °C, and preferably <400 °C and more preferably <350 °C. For sulphide ores and sulphide concentrates, a higher temperature is preferred, typically between 500 to 1000 °C. A number of suitable roasters are available for this process step including one or a combination of multiple-hearth roasters, suspension roasters, or fluidized bed roasters. Roasting converts the oxidised zinc content of the concentrate to zinc oxide, producing a ZnO rich calcine.

For ZnS ores, sulfur dioxide is also produced (as shown in Figure 1). For ZnS ores, the sulfur dioxide can be used for the production of sulphuric acid for the conventional leaching process if required.

The heat given off from this exothermic reaction can be captured using conventional heat exchange technology and subsequently used to provide much of the energy needed for subsequent processing steps, such as the ammonia stripping step in the strip-crystallisation steps of the zinc recovery process (described below). This direct use of the heat energy is highly efficient and much preferred over alternate processes such as conversion of the heat energy into electricity via a steam turbine system.

The ZnO rich calcine from the roaster is leached in an ammonia/ammonium chloride solution to selectively leach out the zinc and leave the iron, lead and other similar impurities in a sulphate free residue. Alternatively, where the zinc ore concentrate is directly leached, that zinc ore concentrate is leached in an ammonia/ammonium chloride solution to selectively leach out the zinc and leave the iron, lead and other similar impurities in a sulphate free residue. The majority of the zinc is also leached with only some refractory zinc compounds such as some forms of zinc ferrite not allowing full dissolution of the contained zinc. The details of this leach are covered in detail in International patent application PCT/AU201 1/001507, in which the applicant has discovered that the particular formulation of lixiviant used in the leaching step of the process of the present invention and the particular stripping conditions results in an advantageous zinc precipitate composition in the stripping step, whilst leaching the zinc of a zinc ore, zinc ore concentrate and/or ZnO rich calcine in high enough zinc concentrations to be economically viable.

Without wishing to be bound by any one theory, the applicant has designed the leaching and step of converting the recovered zinc containing precipitate of the process of the present invention to take advantage of the equilibrium which is established between the soluble and insoluble metal complexes of the oxides and mixed metal oxides in such a ZnO calcine or zinc ore concentrate when leached by a lixiviant. The particular lixiviant of the present invention provides a mix of ligands which facilitate this equilibrium. Ammonia, ammonium chloride, hydroxide and water are all available for metal complex formation.

The applicant has found that the intermediate precipitate formed during the ammonia stripping step is substantially dependant on the composition of the lixiviant used in the leaching step. The particular lixiviant formulation used in the leaching step of the present invention comprises an ammonia concentration of between 20 g/L H 20 and 150 g/L H 20 and a low NH 4Cl concentration (less than 150 g/kg H 20, preferably less than 130 g/kg H 20 and more preferably less than 100 g/kg H 20) leads to zinc hydroxy chloride (Zn 5(OH) 8Cl 2.H 20), and zinc hydroxide (Zn(OH) 2) being predominantly precipitated when a selected ammonia content of the resulting leachate is stripped from solution. It should be appreciated that an amount of zinc oxide (ZnO) can also be produced. This intermediate precipitate composition enables a final ZnO product to be produced using much lower energy than has traditionally been possible in prior zinc recovery processes.

High concentration NH 4Cl lixiviants used in prior NH 4Cl based leaching processes substantially all give zinc dichlorodiammine (ZDC) crystals as the intermediate precipitate unless diluted with additional water. This is consistent with published chemistry that cites that at >3M Cl ∼ NH 4Cl at 165 g/kgH 2O the crystals are always ZDC. However, such an aqueous dilution step requires a large amount of water to be added to the process which must be subsequently removed. This adds a significant energy loading to this type of zinc recovery process. A zinc dichlorodiammine (ZDC) intermediate is also more difficult to process as it is an unsuitable roasting precursor for ZnO. ZDC decomposes to NH 3and ZnCl 2rather than ZnO when roasted at temperatures between 300 and 900 °C. The thermal decomposition of ZDC is a well-known method of producing anhydrous ZnCl 2.

The addition of the NH 3to the lixiviant enables these lower NH 4Cl levels to be used as it improves the solubility of zinc such that the leach liquor can leach the zinc from the ZnO calcine without needing excessive volumes of liquor and the zinc can then be precipitated out without the need to cool the leach liquor to very low temperatures to drop the solubility.

In the first step leach illustrated in Figure 1, the ZnO rich calcine or zinc carbonate or zinc silicate ore or concentrate is leached with an alkaline lixiviant comprising an aqueous mixture of ammonium chloride and ammonia. The leach is conducted as a two stage counter current leach. The lixiviant composition is preferably ∼ 50 g/L NH 4Cl liquor containing ∼ 50 g/L NH 3. However, it should be appreciated that a large number of other concentrations could also be used within the scope of the present invention. The maximum NH 4Cl level is determined by the need to substantially avoid ZDC crystal formation. Additionally, the applicant has found that the solubility of the zinc in this lixiviant depends on the NH 4Cl and NH 3concentrations but these have minimal impact on the total zinc extracted. The concentration of NH 3in the lixiviant is therefore selected to optimize the solubility of zinc in the lixiviant and to minimise the energy needed to strip the NH 3and precipitate the zinc compounds.

The two stage leach system is considered to provide a zinc extraction in the order of 80 to >95%. However, it should be appreciated that the exact extraction is dependent on the composition of the zinc ore concentrate and/or ZnO rich calcine used in the process. A zinc yield across leaching is typically in the order of 15 to 50 g/L based on the solubility range as the ammonia is removed and the zinc compounds precipitated. Each leaching stage is agitated, typically conducted in a stirred vessel. The applicant has found that these particular leaching conditions are not substantially temperature dependent. Each leach stage can therefore be conducted at room temperature (10 to 35 °C) if desired. In practice, the leaching stage is run at between 30 to 90 °C, preferably about 50 to 60 °C for circuit heat balance considerations.

The leaching step produces a pregnant liquor substantially which includes the zinc with small amounts of solubilised manganese, lead, copper and cadmium. A solid leach residue is also produced.

The pregnant liquor is then separated from the leached residue in a filter and/or thickener system to produce a high zinc content pregnant liquor. The clarity of the pregnant liquor is important in minimizing the loads on subsequent filtering stages, for example a filter after cementation (discussed below). Flocculent additions may therefore be needed to remove any fine particles in the leachate.

The residue containing the lead, iron and other impurities is separated using filtration or other separation method and then pyrometallurgically or hydrometallurgically treated. Hydrometallurgical treatment typically involves the use of strong acids. This is currently used in a number of conventional zinc production plants.

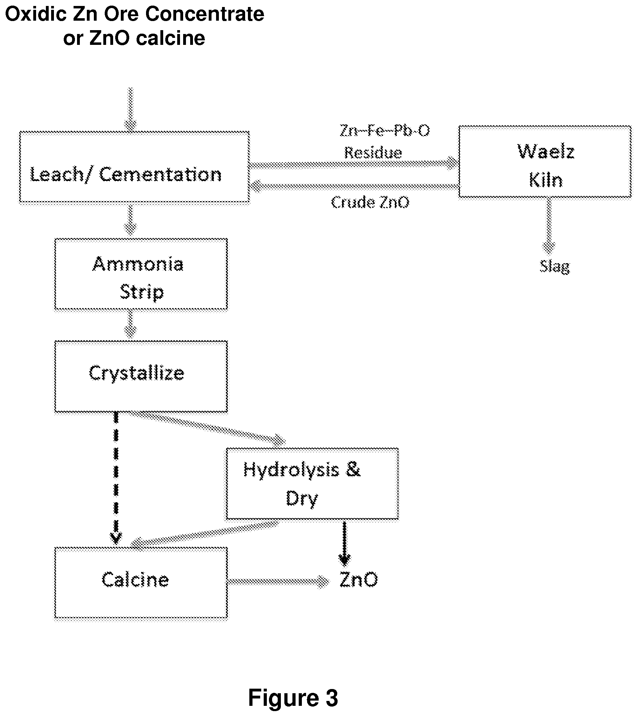

Figure 3 shows a flow sheet of an integrated plant in which the residue containing the lead, iron and other impurities is treated pyrometallurgically, as the absence of sulphur allows this material to be treated in Waelz kilns and/or through lead plants and slag fumer systems. Where the material is treated pyrometallurgically it can after treatment be leached using the same system to recover zinc as zinc oxide.

Where a preroasting step is used, there may be advantages for large tonnage plants in only treating part of the calcine through the ammonia/ammonium chloride leach. This enables additional production from the site with only the roaster and acid plant needing increased capacity without the need for additional electrowinning which has a high cost to build. Treating more zinc ore concentrate through the roaster also provides more energy that can be used for the ammonia removal step which improves the overall energy balance of the combined process.

The resulting pregnant liquor typically undergoes purification processes to remove other solubilised metals. In the purification process, the pregnant liquor may be passed through a controlled oxidation step to remove the lead and manganese from the liquor, or may be fed directly to a cementation step where the copper and cadmium are removed by cementation on zinc. In the cementation process, the pregnant liquor is mixed with zinc powder typically (0.2 to 2 g/L) to remove soluble metals, especially copper, which is detrimental to the product in the ceramics market. After cementation the slurry is filtered on a fine pressure filter to remove the unreacted zinc, the metallic impurities, and colloidal particles which remain from the leach circuit.

The resultant liquor now predominantly includes the zinc in solution. The solubility of the zinc in solution is dependent on the amount of ammonia present in the liquor. The ammonia concentration can therefore be reduced to force the zinc containing crystals to precipitate. This is achieved in the present process in the strip step (Figure 1) where an ammonia content of the pregnant liquor is stripped using heat and/or air and/or vacuum.

In one process route, the zinc rich pregnant liquor is passed into a hot ammonia stripping step. In this step, a heating system is used to pressurize and heat (typically between 80 °C and 130 °C) the pregnant liquor, which is then fed into a strip vessel (not illustrated). In some process routes, the zinc rich pregnant liquor is fed into a two step air stripping system which is discussed in detail in International patent application PCT/AU201 1 /001507. In another embodiment, the heated pregnant liquor can be fed into a flash vessel (not illustrated) to flash off a mixed ammonia-water vapour stream leaving a supersaturated zinc liquor.

In each stripping step, the zinc rich pregnant liquor may be continually heated in one or more of the strip vessels of the process steps. Heating may be achieved using an external heat exchanger, or as noted above part or all of the heat can be supplied by capturing waste heat from a furnace used in the zinc ore roasting step (in applicable embodiments) and transferring this heat using a suitable heat exchange system to the stripping step to heat the pregnant liquor to the desired temperature for use in the stripping vessel(s).

Heating may also be achieved using steam and/or hot liquids generated from external sources with reasonable proximity to the processing plant. These can either be from coal or gas fired furnaces such as are used for electricity generation, for iron and steelmaking and/or for treating residues or electric arc furnace dusts such as Waelz kilns.

The heating can also be achieved using hot liquids from renewable sources such as from solar thermal installations or in some cases from geothermal sources. The direct use of this heat is much more efficient than using these heat sources for electricity.

In the process of the present invention, the stripped liquor is therefore stripped of ammonia to a final NH 3concentration of between 7 and 30 g/L H 20 and preferably has a pH greater than 7. The applicant considers that the energy requirement to reduce the final NH 3concentration to lower than this range (and to have a solution pH of less than 7) would be uneconomical, due to the large amount of water that is needed to be evaporated to remove ammonia content. The resulting stripped liquor pH and NH 3concentration create the appropriate equilibrium conditions within that liquor to precipitate desirable basic zinc compound or mixture of compounds.

In one embodiment, part or all of the ammonia-water air vapour mixture from the stripping stage can be fed to a stripping column to take out a low ammonia water stream and ammonia vapour which is captured in a suitable scrubber. The water stream preferably has a low ammonia content and is therefore suitable for use in subsequent washing steps and vapour capturing steps, such as a zinc chloride vapour capture step described below. The ammonia vapour is cooled and condensed, or is contacted with aqueous liquor using a wet scrubber and dissolved into the liquor for recycle to the leach. The aqueous liquor used can be the filtrate from the precipitation stage but other streams from the process could also be used.

In another embodiment, all of the ammonia-water air vapour mix is fed into an absorption column and contacted with cooled aqueous liquor, which is preferably the zinc and ammonia depleted liquor from the ammonia stripping with the crystals removed by filtration and/or settling, such that the majority of the ammonia and water are absorbed into the liquid leaving an air stream with low ammonia and water content for recycle into the ammonia stripping circuit.

In another embodiment, a two stage strip system is used where the ammonia- water air vapour mix from the second stage is fed to a condensing heat exchanger where the heat is transferred to a liquor stream which is fed to the first strip stage while the condensate which is low in ammonia is separated from the uncondensed vapour and used within the circuit for washing filter cakes and/or for the hydrolysis step.

Following the process steps in Figure 1, the supersaturated zinc liquor is passed into a crystallizer or crystallisation stage (shown as a crystallize stage in Figures 1, 2 and 3). In some embodiments, the crystallisation stage may be conducted insitu within the stripping vessels. In other embodiments, the supersaturated zinc liquor may be fed into a separate crystallisation vessel or vessels for example an agitated tank in which the liquor has an extended residence to allow the crystals to form and grow. If desired, the liquor can be cooled using a heat exchanger before entering the crystallisation tank and additional cooling can be provided in the tank. The resulting crystals are filtered on a conventional filter press, washed in a water or water-ammonia stream (produced from the stripping stage), and then discharged onto a belt conveyer.

The crystals are typically predominantly zinc hydroxy chloride (Zn₅(OH)₈Cl₂.H₂0), and zinc hydroxide (Zn(OH)₂) with, in some cases, an amount of zinc oxide (ZnO). The crystals typically have ∼ 1 to 14% Cl with little or no ZDC content. The spent liquor from the filter press is substantially recycled to the second stage of the two stage leach. In this recycling step, the spent liquor can be used as a medium capture in the scrubber which follows the stripping column. The spent liquor may also be used as a scrubbing medium following hot air stripping column from the bleed step described below. The wash water from the crystal filter can also be used in a subsequent process, in this case a ZnCl 2capture medium to capture ZnCl 2volatilised during the roasting stage. It can also be used as make up water for the process.

The crystals are then fed to a recovery process which can proceed along various different process steps to convert the crystals into a low chloride zinc oxide product. As shown by the solid and dashed process lines in Figure 1, the recovery process which may include a hydrolysis stage, a calcining stage or both. The exact converting step(s) depends on the quality and purity of zinc oxide product desired.

In some process embodiments, the crystals can be hydrolysed to substantially convert any of the zinc hydroxy chloride content to at least one of zinc hydroxide or zinc oxide. Where the temperature of the hydrolysis water is hot, for example at a temperature of between 90 to 300 °C, a hydrolysis product substantially comprising Zn(OH)₂ and/or ZnO zinc oxide can be produced with only a small amount of residual insoluble chloride remaining. In some cases, the hydrolysis product can include less than 0.4% insoluble chloride. This conversion route applies to crystals that are almost all zinc hydroxy chloride (-13% Cl) through to lower chloride crystals (<7%) and very low chloride crystals (<2%) that can be made directly from the previously described ammonia strip and crystallisation steps in controlled conditions.

It is noted that the conversion reaction can also proceed at lower temperatures. However, the applicant has found that the reaction is not as efficient in comparison to the higher temperature reaction and the chloride level remaining in the hydrolysis product is higher, being around 1 % at 60°C and 3% at 25°C when treating crystals with initial chloride contents above 3%. The total chloride present depends upon how much soluble chloride also remains and this is controlled by washing the crystals with suitable levels of water.

The reaction is not reversible and once formed the low chloride crystals do not increase in chloride content when they are cooled down, even in the presence of chloride containing liquor. The mixture can then be cooled and filtered at around 50 to 60 °C in conventional filtration equipment.

Quite high solids loadings (at least 20%) can be used and therefore the water additions are quite modest. Lower chloride crystals are therefore preferred as these require less water addition which improves the economics of the process as the added water has to be removed.

The chloride released into the water during hydrolysis is removed using reverse osmosis to recover clean water for reuse. The chloride content is concentrated to chloride levels that are compatible with the liquor in the leaching and crystallisation stages allowing this stream to also be readily recycled in the process.

Following hydrolysis, the hydrolysis product can be dried at a temperature of <200 °C to produce a high purity zinc oxide product (>99% ZnO). This product typically has high surface area (>3 m <2>/g) due to the presence of fine porous particles and therefore is ideally suited to applications requiring very active ZnO such as where the ZnO serves as a catalyst in chemical reactions and/or vulcanising rubber. The surface area achieved can be modified by changing the liquor composition to precipitate crystals with varying levels of chloride which in turn give varied surface areas after hydrolysis.

Where a very high purity product is desired, this low chloride - low water product can be fed into a furnace. The furnace only has to remove a small amount of chloride, and no water, allowing for much higher throughput and a much simpler, smaller gas scrubbing system. The hydrolysed product can be calcined / roasted between 300 to 900 °C to produce very high purity zinc oxide. A lower temperature roast may be used if substantially all of the chloride content is removed in the hydrolysis step. The water from hydrolysis contains some zinc and therefore at least a portion of the water from the hydrolysis step is removed using reverse osmosis and the more concentrated liquor either recycled to the leach or treated to recover the zinc content. Where treatment is favoured, the recovered water can be treated with NaOH to precipitate any zinc content for recycle into the process. The NaOH treated water can be discharged from the process as a low concentration NaCl stream. This helps maintain the chloride balance in the circuit but has an added cost in NaOH use. If all the chloride is not removed by hydrolysis, final chloride traces in the precipitate can be removed by roasting the hydrolysed zinc containing precipitate at temperatures between 600 to 900 °C.

The roasting step also changes the surface area of the product and where desired high temperature roasting is used to give a low surface area (<1 m <2>/g) product which is more suitable for applications where a higher bulk density product is preferred. The exact choice of crystal precipitate composition depends on where they are used. Hydrolysis and roasting conditions therefore depends upon the target market for the product which gives the process another advantage over conventional ZnO production where there is little opportunity to modify the properties of the product.

In other process embodiments, the crystals are directly calcined to convert the intermediate precipitate into ZnO.

In one embodiment, the crystals are heated to a temperature of between 300 to 500 °C. This roasting step decomposes the chloride compounds into ZnO and ZnCl 2. The soluble chloride compounds (mainly ZnCl 2) are then substantially removed in the aqueous leach to produce a leached solid. Any traces of chloride left can then be removed through further, preferably higher temperature calcining step, such as between 300 to 900 °C. This step also converts the Zn containing compounds in the leached solids to ZnO. The double calcining regime enables less water to be used to remove the chloride content in comparison to the previous recovery option as ZnCl 2is extremely soluble.

In another process embodiment, the crystals can be heated in a steam atmosphere at around a temperature of between 350 to 500 °C. This process step would likely be undertaken at moderate pressure, of 1 to 5 bar. This process aims to decompose the zinc hydroxy chloride into ZnO and ZnCl 2and to hydrolyse the ZnCl 2in situ to convert it to ZnO. The majority of the chloride content can be removed as HCl.

In another process embodiment, the crystals are directly calcined in a furnace at a temperature of between 600 to 900 °C. Any volatilised ZnCl 2is captured and recycled. Roasting between these temperatures substantially converts the product to zinc oxide. Furthermore, any chloride content of the zinc containing precipitate is volatised at this temperature to predominantly ZnCl 2, thereby giving a low chloride high purity product. Some traces of HCl may also be given off early in the roast through part reaction of the ZnCl 2and H 2O vapour. While higher temperatures speed up the volatilization, the final roasting temperature depends mainly on the economics at any specific installation. It should however be appreciated that removal of chlorides to <0.4% Cl in the end product typically involves roasting the zinc containing precipitate to temperatures in the order of 500 to 900 °C. Furthermore, removal of chlorides to <0.2% Cl in the end product typically involves roasting the zinc containing precipitate to temperatures in the order of 600 to 900 °C even with prior treatment.

Low ammonia zinc containing precipitate is well suited to roasting as the main chloride containing compound zinc hydroxy chloride (Zn 5(OH) 8Cl 2.H 2O) decomposes to a mixture of ZnO (the major fraction) and ZnCl 2(the minor fraction). The ZnO remains as a solid while the ZnCl 2volatilises off at elevated temperatures.

The volatilised ZnCl 2can be readily captured from the gas stream in a wet scrubber using an aqueous medium for recycle back to the leach. Such a ZnCl 2capture stream can run in a continual recycle loop such that the composition reaches the target for leach (estimated at ∼ 200 g/L ZnCl 2). This high concentration ZnCl 2solution can then be recycled back into the process and/or treated to recover special grades of ZnO product. Most commonly, the ZnCl 2stream will be returned to the crystallisation stage but in some cases there may be advantages in returning it directly to the leach circuit. Water from the ammonia stripping column directly and via the crystal filter wash can be added to retain the concentration and corresponding volume will be recycled into the process.

This high ZnCl 2stream can also be used to make specialty grade ZnO products by precipitating ZnO and/or Zn(OH) 2with high purity and controlled particle size and morphology by adding NaOH or similar base to the liquor in a controlled manner. This high ZnCl 2liquor is particularly attractive as it has very high purity.

In another embodiment the ZnCl 2vapour is not scrubbed with aqueous solution but is condensed to form high purity anhydrous ZnCl 2which can be recovered and sold separately as a product.

The pre-roasting step for zinc sulphide ore typically ensures that this ore is heat treated at temperature sufficient to burn zinc sulphide to zinc oxide. Accordingly, the leach and ammonia strip results in a precipitate substantially comprising zinc oxide/zinc hydroxide/zinc hydroxy chloride precipitate. ZnO can then be recovered using either hydrolysis, or roasting/calcination of the precipitate as discussed above.

For zinc carbonate ore, the choice of zinc or zinc oxide recovery process is dependent on whether the ore underwent a pre-roasting step.

Where the zinc carbonate ore contains little or no zinc carbonate and/or was pre-roasted at temperature sufficient to dissociate zinc carbonate, the leach and ammonia strip results in a precipitate substantially comprising zinc oxide/zinc hydroxide/zinc hydroxyl chloride precipitate. ZnO can then be recovered using either hydrolysis, or roasting/calcination of the precipitate as discussed above.

Where zinc carbonate containing ore is leached without pre-roasting step, the leach step dissolves both zinc and carbonate to give a pregnant liquor containing carbonate in addition to the zinc, ammonia, and ammonium chloride. The leach liquor is capable of extracting the majority of the zinc contained in the ore. The pregnant liquor then has the ammonia stripped off to precipitate the zinc primarily as mixed zinc hydroxyl chloride, zinc carbonate crystals which may also contain some zinc oxide and/or zinc hydroxide.

These crystals are then hydrolysed to allow water to react with the chloride containing compounds to give crystals that are predominantly zinc carbonate. The hydrolysed crystals are then roasted/ calcined at around 200 to 450 °C to decompose the carbonate, leaving high purity zinc oxide.

Accordingly, direct leaching of zinc carbonate ores removes the need for the ore pre-roast step. However, the presence of carbonate in the pregnant liquor can impact on the ability to strip ammonia as it can lower the liquor pH resulting in a lower proportion of the ammonia being present as "free" ammonia which is more amenable to removal. This can increase the energy required to remove this ammonia and increase the amount of water vaporizing in conjunction with the ammonia in the strip step.

In some cases it may be preferable to chemically remove some or all of this carbonate prior to stripping off the ammonia using known carbonate precipitating ions such as calcium, magnesium or barium. Where calcium is used, this is preferably added as lime (either anhydrous or slaked) to give CaC0 3which can then be precipitated off and either burnt to regenerate the lime or disposed of as residue.

The carbonate precipitation can be done either directly from the pregnant leach liquor or alternatively from either partially ammonia stripped liquor taken from part-way through a multi stage ammonia stripping circuit or even the spent liquor which comes from the ammonia stripping circuit after the zinc crystals have been separated.

Figure 2 provides a general flow diagram showing the process steps for another preferred embodiment of the process according to the present invention which forms part of an integrated ore treatment plant. Here the process described and illustrated in Figure 1 processes zinc ore concentrate concurrently with a conventional sulphuric acid leach process. The conventional process for converting the zinc ore concentrate to Zn metal involves burning the zinc ore concentrate, an in particular a ZnS ore concentrate, in air/oxygen (roasting) to produce a ZnO rich calcine, leaching the ZnO rich calcine in sulphuric acid, purification of the leachate to prepare a zinc electrolyte from which zinc metal is produced by electrolysis. Zinc oxide can then be produced by thermal treatment/conversion of the zinc metal.

The ZnO produced from the ammonia circuit is ideally sold as a high value product for direct use in applications such as rubber and/or ceramics. However in some cases it may be preferable to use this ZnO to make metal by dissolving it in a suitable electrolyte such as sulphuric acid and then electrowinning as shown in the flow sheet in Figure 1 . This approach allows the treatment of the concentrates to be cost effectively carried out at a different location from the electrowinning. Because of the high cost of building an electrowinning plant and the large amount of electricity used this electrowinning step may be built where there is ready access to low cost electricity whereas the original roasting and ZnO production can be located close to the mine and/or close to a suitable location where there is an outlet for the sulphuric acid produced from the sulphur dioxide in the gas stream. This method of carrying out these steps at different locations is analogous to the how the different steps in the production of aluminium are arranged.

The ZnO produced from the ammonia circuit can also be used to produce other zinc chemicals such as zinc sulphate which is readily produced by dissolving the ZnO in sulphuric acid such as that produced from the SO 2which is given off when ZnS ore or ZnS ore concentrate is calcined. The ZnO from the ammonia circuit is ideal for this application as it has high purity and can be added in controlled amounts to give any desired composition.

### Example 1: Zinc Carbonate Ore

Samples of the same zinc carbonate (smithsonite) ore from Guatemala were subjected to various calcination temperatures between 200 °C and 700 °C. A control sample, subject to no heat treatment was also used.

Leach and ZnO recovery of the untreated and heat treated ore was undertaken in accordance with the process described above, using batch leach processes, with a lixiviant composition of ∼ 50 g/L NH 4Cl liquor containing ∼ 50 g/L NH 3at 60 °C to extract up to 94.8% of the zinc and achieving up to 40g/L zinc in the pregnant liquor. Batch ammonia stripping steps were conducted to produce precipitates that contained varying amounts of zinc carbonate/ zinc hydroxychloride depending on the heat treatment options prior to leaching. Precipitates were hydrolysed in hot dilute ammonia solution to produce mixtures of high purity zinc oxide/ hydroxide and high purity zinc carbonate. That mixture was then converted to zinc oxide via roasting at 325 °C.

A mass balance of the (A) control ore (none), (B) ore with a preroasting step heat treatment at 300 °C and (C) ore with a preroasting step heat treatment at 600 °C was compiled for the various steps of the process. The results are provided in table 1.

**Table 1: Heat Treatment of Ore - Mass Balance**

| **Assuming It Ore Treated upfront** | | | |
|---|---|---|---|
| **Ore Treatment Temperature (°C)** | **None** | **300** | **600** |
| Mass After Heal Treatment (kg) | 1000 | 760 | 730 |
| Zinc Content(%) | 33.2 | 43.1 | 45.6 |
| Zinc Extraction Efficiency (%) | 89.8 | 94.8 | 91.4 |
| Mass Pregnant Liquor (t) | 9.9 | 10.3 | 10.1 |
| Mass Leach Residue (kg) | 563 | 364 | 347 |
| Mass Precipitate (kg) | 220 | 393 | 321 |
| Precipitate Content - Zinc | 57.8 | 52.6 | 57.2 |
| Precipitate Content - Chloride | 3.8 | 20.3 | 15.6 |
| Hydrolysed Solid (kg) | 215 | 251 | 205 |
| Mass Final Zinc Oxide (kg) | 161 | 243 | 198 |

The results shown in Table 1, show that zinc carbonate ore can be used to produce zinc oxide effectively both with and without an upfront heat treatment. However, heat treatment at around 300 °C gives a higher yield as compared to no heat treatment or from high temperature (>600 °C) heat treatment.

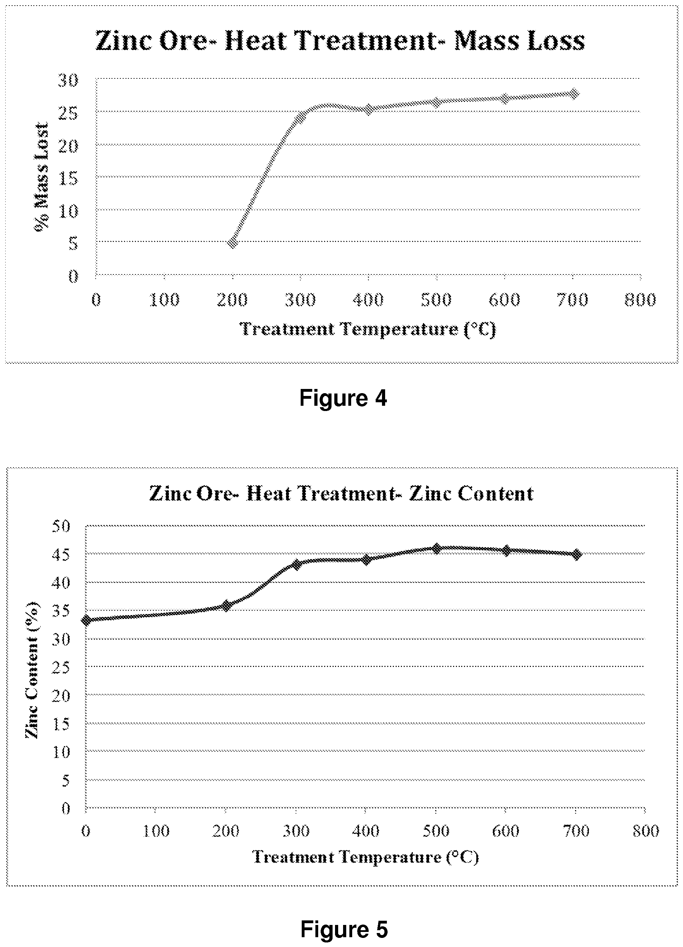

In addition, the mass loss, zinc content, leach efficiency and precipitate zinc and chloride contents of various heat treated ore samples were measured. The results are shown on Figure 4 to 7.

The pre-roasting step of zinc carbonate ore is used to convert the carbonate to zinc oxide. As shown in Figure 4, during roasting there is considerable weight/mass loss when the ore is heated at temperatures sufficient to decompose the zinc carbonate. This mass loss increases the effective zinc concentration in the ore (Figure 5).

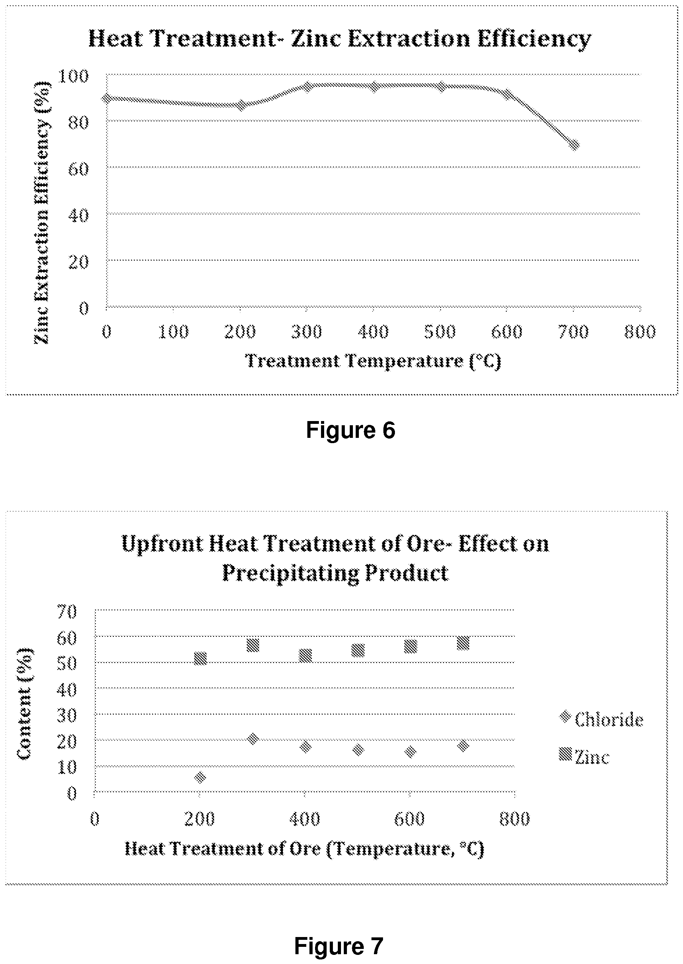

However, the Applicant has found that the pre-roasting step does not improve the leach extraction significantly for zinc carbonate ores. As shown in Figure 6, at high temperatures the pre-roasting process actually reduces the Zn extraction in the leach. However, it should be noted that calcination zinc carbonate ore can be advantageous in reducing the energy required during subsequent processing of the pregnant liquor from the leach to give high purity ZnO.

Overall, looking at the results provided in Figures 5 and 6, it is apparent that the selected leachant is particularly effective for zinc carbonate ores where there is no prior heat treatment or this heat treatment is only at low temperatures of <400 °C and more preferably <350 °C.

As previously noted, there are differences in the specific chemistry and the composition of some of the intermediate compounds depending on the temperature of the pre-roasting step. This is illustrated by studying the composition of the crystals precipitated after ammonia stripping for a zinc carbonate (smithsonite) ore with different heat treatment temperatures is shown in Figure 7. The crystals prepared for heat treated ore (300 °C or higher temperature) typically contain around 15% chloride and 55% zinc although this can be modified to give higher zinc (>65%) and lower chloride (<5%) by manipulating the precipitation conditions. In contrast the non heat treated ore gives low chloride (<10%) low zinc (<55%) crystals with substantial carbonate present.

The difference in the crystal composition is highlighted after hydrolysis to react the chloride compounds with hot water with the crystal product from the heat treated ore hydrolyzing to give a high Zn (>75%) product whereas the crystal product from the non-heat treated ore hydrolyses to give a product with only around 59% zinc, synonymous with it being predominantly zinc carbonate rather than zinc oxide/zinc hydroxide. The zinc carbonate does not hydrolyse under the temperatures typically used for the hydrolysis step and needs subsequent heat treatment to convert it to the desired zinc oxide.

With respect to the final product, minimal residual chloride was evident in the hydrolysed zinc carbonate solid (<0.1 %) which then gives very high purity ZnO after heat treatment at -300 °C to decompose the zinc carbonate to zinc oxide. If heat treated prior to leaching, the zinc carbonate ore ultimately produced precipitates which after hydrolysis and drying at -200 °C produced high purity zinc oxide containing -0.6% chloride.

### Example 2: Zinc Sulphide Ore

### 2.1 Roasting Test

A small 500g sample of a Sphalerite concentrate produced from a typical sphalerite ore received from the Ian Wark Research Institute, Western Australia sourced from ore extracted from the Cadjebut Mine located 71 km south east of Fitzroy Crossing in Western Australia was roasted at 1000 °C for 15 hours to determine if the composition of the concentrate changed.

Mass analysis indicated that the concentrate lost on average 17.4 % of its mass. Sulphur accounts for 32.9 % of the ZnS mass and as oxygen attaches to the zinc to form zinc oxide, the theoretical mass loss should have been 16.5 % indicating that the roasting step had removed the sulphur. The composition of the roasted material was analysed using ICP-MS and was found to contain 1 .8% sulphur compared to 30.5% in the original feed, confirming that sulphur was largely removed by the roasting step. 2.2 Leach Test

Two samples of the same Sphalerite concentrate as received were leached at low solids (2% w/v) in 60/50 liquor for 4 hours at 60 °C to determine if any of the zinc in the zinc sulphide could be leached. No zinc was leached in either of these leaches. A high solids leach (30% w/v) was also conducted with the ore as received and a minute 0.07 g/L zinc was leached.

Two samples of the 1000 °C roasted concentrate were also leached at 2% solids in a single batch leach using 60/50 liquor for 4 hours at 60 °C to determine the portions of each element leached. The two leaches extracted 83.0 % and 82.2 % of the zinc indicating that the 1000 °C roast had converted the majority of the zinc sulphide to zinc oxide which is amenable to leaching using the ammonia-ammonium chloride liquor. The pregnant liquor from the leach step was treated with 0.5 g/L technical grade zinc powder to reduce the cadmium and lead concentrations in the liquor to undetectable levels (below 2 ppm).

The purified pregnant liquor was heated to strip the ammonia down to a concentration of 20.2 g/L causing zinc containing crystals to precipitate of composition 61 .7 % zinc and 16.8 % chloride which is predominantly zinc hydroxy chloride.

The moist crystals were hydrolysed in water containing around 10 g/L ammonia for 2 hours at 100 °C using 10% solids loading (w/v). 32.1 % of the crystal mass dissolved through hydrolysis and the resulting solid contained 78.9 % zinc and 0.70% chloride indicating that conversion to zinc oxide had occurred. The hydrolysed solid was dried at 200 °C to remove any entrained moisture and perform the final conversion to high purity zinc oxide. A portion of the hydrolysed solid was also roasted at >750 °C to produce super high purity zinc oxide in which the chloride level was below detection limits of conventional analysis systems (i.e. <50 ppm).

## Claims

1. A process for recovering zinc oxide from a zinc ore, the process including the steps of:
roasting the zinc ore in air/oxygen atmosphere to produce a ZnO rich calcine;
leaching the ZnO rich calcine with an alkaline lixiviant comprising an aqueous mixture of NH₃ and NH₄Cl, or ionic equivalent, having a NH₄Cl concentration of between 10 g/L and 150 g/L H₂O and a NH₃ concentration of between 20 g/L H₂O and 250 g/L H₂O, to produce a zinc containing leachate and a solid residue;
stripping ammonia from the leachate to produce a stripped liquor which includes a zinc containing precipitate, the stripped liquor having a NH₃ concentration of between 7 and 30 g/L H₂O;
separating the zinc containing precipitate from the stripped liquor; and
converting the recovered zinc containing precipitate into zinc oxide using one or both of the steps of:
roasting the zinc containing precipitate to a temperature of between 400 to 900 °C; or
hydrolysis of the zinc containing precipitate in water having a temperature of between 80 and 300 °C.

2. A process according to claim 1, wherein the zinc ore includes a zinc carbonate ore content and/or a zinc silicate ore content, preferably comprises a zinc carbonate ore or a zinc silicate ore.

3. A process according to claim 1 or 2, wherein:
the zinc ore comprises a zinc carbonate ore or zinc carbonate ore concentrate and the zinc ore roasting step is conducted between 200 °C and 800 °C; or
the zinc ore comprises a zinc sulphide ore or zinc sulphide ore concentrate and the zinc ore roasting step is conducted between 600 and 900 °C.

4. A process according to any one of claims 1 to 3, wherein the stripped liquor has a pH greater than 7.

5. A process according to any preceding claim, wherein the stripping step includes an air stripping process step.

6. A process according to any preceding claim, further including the step of utilising at least a portion of the exothermic energy from the zinc ore roasting step in the ammonia stripping step.

7. A process according to any one of claims 1 to 6, wherein zinc containing crystals are precipitated in the stripped liquor in the form of at least one of zinc hydroxide (Zn(OH)₂), zinc hydroxy chloride (Zn₅(OH)₈Cl₂.H₂O), zinc oxide (ZnO), or zinc carbonate (ZnCO₃) or a combination thereof.

8. A process according to any one of claims 1 to 7, wherein the step of converting the recovered zinc containing precipitate includes the step of:
hydrolysis of the zinc containing precipitate in water having a temperature of between 80 and 200 °C.

9. A process according to any one of claims 1 to 8, wherein the step of converting the recovered zinc containing precipitate include the step of:
drying the zinc containing precipitate at a temperature of between 80 and 300 °C.

10. A process according to any one of claims 1 to 9, wherein the step of converting the recovered zinc containing precipitate include the steps of:
a first roasting step in which the zinc containing precipitate is roasted at a temperature of between 300 to 500 °C; and
a second roasting step in which the roasted solids are further roasted between 300 to 900 °C.

11. A process according to claim 10, wherein after the first roasting step, the roasted zinc containing precipitate undergoes a leaching step with water to produce a leached solid.

12. A process according to any one of claims 1 to 11, wherein the step of converting the recovered zinc containing precipitate include the steps of:
hydrolysis of the zinc containing precipitate in water having a temperature of between 80 and 300 °C; and
roasting the zinc containing precipitate to a temperature of less than 500 °C.

13. A process according to any one of claims 1 to 12, where the ZnCl₂ is volatised in a roasting step and further including at least one of the following:
condensing the ZnCl₂ and separated for sale as anhydrous ZnCl₂; or
capturing the ZnCl₂ into an aqueous liquor and recycling this liquor to a preceding process step.

14. A process according to any one of claims 1 to 13, further including at least one of the steps of:
concentrating the zinc containing ore prior to leaching; or
comminuting the zinc containing ore prior to leaching.

## Patentansprüche

1. Verfahren zum Gewinnen von Zinkoxid aus einem Zinkerz, wobei das Verfahren die folgenden Schritte einschließt:
Rösten des Zinkerzes in einer Luft/Sauerstoff-Atmosphäre, um ein ZnOreiches Calcin zu herzustellen;
Auslaugen des ZnO-reichen Calcins mit einem alkalischen Auslaugmittel umfassend ein wässriges Gemisch aus NH₃ und NH₄Cl oder ein ionisches Äquivalent, aufweisend eine NH₄Cl-Konzentration von zwischen 10 g/l und 150 g/l H₂O und eine NH₃-Konzentration von zwischen 20 g/l H₂O und 250 g/l H₂O, um eine zinkhaltige Lauge und einen festen Rückstand herzustellen;
Strippen von Ammoniak von der Lauge, um eine gestrippte Flüssigkeit herzustellen, die eine zinkhaltige Ausfällung einschließt, wobei die gestrippte Flüssigkeit eine NH₃-Konzentration von zwischen 7 und 30 g/l H₂O aufweist;
Abtrennen der zinkhaltigen Ausfällung von der gestrippten Flüssigkeit; und
Umwandeln der gewonnenen zinkhaltigen Ausfällung in Zinkoxid unter Verwendung eines oder beider der folgenden Schritte:
Rösten der zinkhaltigen Ausfällung bei einer Temperatur von zwischen 400 und 900 °C; oder
Hydrolyse der zinkhaltigen Ausfällung in Wasser aufweisend eine Temperatur von zwischen 80 und 300 °C.

2. Verfahren nach Anspruch 1, wobei das Zinkerz einen Zinkcarbonaterzgehalt und/oder einen Zinksilikaterzgehalt einschließt, vorzugsweise ein Zinkcarbonaterz oder ein Zinksilikaterz umfasst.

3. Verfahren nach Anspruch 1 oder 2, wobei:
das Zinkerz ein Zinkcarbonaterz oder Zinkcarbonaterzkonzentrat umfasst und der Röstschritt von Zinkerz zwischen 200 °C und 800 °C vorgenommen wird; oder
das Zinkerz ein Zinksulfiderz oder Zinksulfiderzkonzentrat umfasst und der Röstschritt von Zinkerz zwischen 600 und 900 °C vorgenommen wird.

4. Verfahren nach einem der Ansprüche 1 bis 3, wobei die gestrippte Flüssigkeit einen pH-Wert von mehr als 7 aufweist.

5. Verfahren nach einem der vorstehenden Ansprüche, wobei der Schritt des Strippens einen Verfahrensschritt des Strippens von Luft einschließt.

6. Verfahren nach einem der vorstehenden Ansprüche, ferner einschließend den Schritt des Verwendens von mindestens einem Teil der exothermen Energie aus dem Röstschritt des Zinkerzes in dem Schritt des Strippens von Ammoniak.

7. Verfahren nach einem der Ansprüche 1 bis 6, wobei zinkhaltige Kristalle in der gestrippten Flüssigkeit in der Form von mindestens einem von Zinkhydroxid (Zn(OH)₂), Zinkhydroxychlorid (Zn₅(OH)8Cl₂.H₂O), Zinkoxid (ZnO) oder Zinkcarbonat (ZnCO₃) oder einer Kombination davon ausgefällt werden.

8. Verfahren nach einem der Ansprüche 1 bis 7, wobei der Schritt des Umwandelns der gewonnenen zinkhaltigen Ausfällung folgenden Schritt einschließt:
Hydrolyse der zinkhaltigen Ausfällung in Wasser aufweisend eine Temperatur von zwischen 80 und 200 °C.

9. Verfahren nach einem der Ansprüche 1 bis 8, wobei der Schritt des Umwandelns der gewonnenen zinkhaltigen Ausfällung folgenden Schritt einschließt:
Trocknen der zinkhaltigen Ausfällung bei einer Temperatur von zwischen 80 und 300 °C.

10. Verfahren nach einem der Ansprüche 1 bis 9, wobei der Schritt des Umwandelns der gewonnenen zinkhaltigen Ausfällung folgende Schritte einschließt:
einen ersten Röstschritt, bei dem die zinkhaltige Ausfällung bei einer Temperatur von zwischen 300 und 500 °C geröstet wird; und
einen zweiten Röstschritt, bei dem die gerösteten Feststoffe bei zwischen 300 und 900 °C weiter geröstet werden.

11. Verfahren nach Anspruch 10, wobei die geröstete zinkhaltige Ausfällung nach dem ersten Röstschritt einem Schritt des Auslaugens mit Wasser unterzogen wird, um einen ausgelaugten Feststoff herzustellen.

12. Verfahren nach einem der Ansprüche 1 bis 11, wobei der Schritt des Umwandelns der gewonnenen zinkhaltigen Ausfällung folgende Schritte einschließt:
Hydrolyse der zinkhaltigen Ausfällung in Wasser aufweisend eine Temperatur von zwischen 80 und 300 °C; und
Rösten der zinkhaltigen Ausfällung bei einer Temperatur von weniger als 500 °C.

13. Verfahren nach einem der Ansprüche 1 bis 12, wobei das ZnCl₂ in einem Röstschritt verdampft und ferner mindestens einer der folgenden Schritte eingeschlossen ist:
Kondensieren des ZnCl₂ und zum Verkauf abgetrennten als wasserfreies ZnCl₂; oder Abscheiden des ZnCl₂ in eine wässrige Flüssigkeit und Zurückführen dieser Flüssigkeit zu einem vorstehenden Verfahrensschritt.

14. Verfahren nach einem der Ansprüche 1 bis 13, ferner einschließend mindestens einen der folgenden Schritte:
Konzentrieren des zinkhaltigen Erzes vor dem Auslaugen; oder Zerkleinern des zinkhaltigen Erzes vor dem Auslaugen.

## Revendications

1. Procédé pour la récupération d'oxyde de zinc à partir d'un minerai de zinc, le procédé comprenant les étapes de :
torréfaction du minerai de zinc dans une atmosphère air/oxygène pour produire un calciné riche en ZnO ; lixiviation du calciné riche en ZnO avec un lixiviant alcalin comprenant un mélange aqueux de NH₃ et de NH₄Cl, ou équivalent ionique, ayant une concentration en NH₄Cl entre 10 g/l et 150 g/l de H₂O et une concentration en NH₃ entre 20 g/l de H₂O et 250 g/l de H₂O, pour produire un zinc contenant du lixiviat et un résidu solide ;
stripping de l'ammoniaque à partir du lixiviat pour produire un liqueur strippé qui comporte un précipité contenant le zinc, le liqueur strippé ayant une concentration en NH₃ entre 7 et 30 g/l de H₂O ;
séparation du précipité contenant le zinc du liqueur strippé ; et conversion du précipité contenant le zinc récupéré en oxyde de zinc en utilisant une ou les deux étapes de :
torréfaction du précipité contenant le zinc à une température entre 400 à 900 °C ; ou
hydrolyse du précipité contenant le zinc dans de l'eau ayant une température entre 80 et 300 °C.

2. Procédé selon la revendication 1, dans lequel le minerai de zinc comporte une teneur en minerai de carbonate de zinc et/ou une teneur en minerai de silicate de zinc, comprend de préférence un minerai de carbonate de zinc ou un minerai de silicate de zinc.

3. Procédé selon la revendication 1 ou 2, dans lequel :
le minerai de zinc comprend un minerai de carbonate de zinc ou un concentré de minerai de carbonate de zinc et l'étape de torréfaction du minerai de zinc est réalisée entre 200 °C et 800 °C ; ou
le minerai de zinc comprend un minerai de sulfite de zinc ou un concentré de minerai de sulfite de zinc et l'étape de torréfaction du minerai de zinc est réalisée entre 600 °C et 900 °C.

4. Procédé selon l'une quelconque des revendications 1 à 3, dans lequel le liqueur strippé a un pH supérieur à 7.

5. Procédé selon l'une quelconque des revendications précédentes, dans lequel l'étape de stripping comporte une étape de procédé de stripping à l'air.

6. Procédé selon l'une quelconque des revendications précédentes, comportant en outre l'étape consistant à utiliser au moins une portion de l'énergie exothermique de l'étape de torréfaction du minerai de zinc dans l'étape de stripping de l'ammoniaque.

7. Procédé selon l'une quelconque des revendications 1 à 6, dans lequel les cristaux contenant le zinc sont précipités dans le liqueur strippé sous la forme d'au moins l'un parmi l'hydroxyde de zinc (Zn(OH)₂), l'hydroxychlorure de zinc (Zn₅(OH)₈Cl₂.H₂O), l'oxyde de zinc (ZnO), ou le carbonate de zinc (ZnCO₃) ou une combinaison de ces derniers.

8. Procédé selon l'une quelconque des revendications 1 à 7, dans lequel l'étape consistant à convertir le précipité contenant le zinc récupéré comporte l'étape de :
hydrolyse du précipité contenant le zinc dans de l'eau ayant une température entre 80 et 200 °C.

9. Procédé selon l'une quelconque des revendications 1 à 8, dans lequel l'étape consistant à convertir le précipité contenant le zinc récupéré comporte l'étape de :
séchage du précipité contenant le zinc à une température entre 80 et 300 °C.

10. Procédé selon l'une quelconque des revendications 1 à 9, dans lequel l'étape consistant à convertir le précipité contenant le zinc récupéré comporte l'étape de :
une première étape de torréfaction dans laquelle le précipité contenant le zinc est torréfié à une température entre 300 à 500 °C ; et
une deuxième étape de torréfaction dans laquelle les solides torréfiés sont en outre torréfiés entre 300 et 900 °C.

11. Procédé selon la revendication 10, dans lequel après la première étape de torréfaction, le précipité contenant le zinc torréfié subit une étape de lixiviation avec de l'eau pour produite un solide lixivié.

12. Procédé selon l'une quelconque des revendications 1 à 11, dans lequel l'étape consistant à convertir le précipité contenant le zinc récupéré comporte l'étape de :
hydrolyse du précipité contenant le zinc dans de l'eau ayant une température entre 80 et 300 °C ; et
torréfaction du précipité contenant le zinc à une température inférieure à 500 °C.

13. Procédé selon l'une quelconque des revendications 1 à 12, dans lequel le ZnCl₂ est volatilisé dans une étape de torréfaction et comportant en outre au moins l'un des éléments suivants :
condensation du ZnCl₂ et séparé pour la vente comme anhydre ZnCl₂ ; ou
capture du ZnCl₂ dans un liqueur aqueux et recyclage de ce liqueur à une étape du procédé précédente.

14. Procédé selon l'une quelconque des revendications 1 à 13, comportant en outre au moins l'une des étapes de :
concentration du minerai contenant le zinc avant la lixiviation ; ou broyage du minerai contenant le zinc avant la lixiviation.
